(19) Europäisches Patentamt
European Patent Office
Office européen des brevets

(11) Veröffentlichungsnummer: **0 093 274**
**B1**

# (12) EUROPÄISCHE PATENTSCHRIFT

(45) Veröffentlichungstag der Patentschrift: **24.07.85**

(51) Int. Cl.⁴: **C 07 F 7/08,** A 01 N 55/00

(21) Anmeldenummer: **83103430.1**

(22) Anmeldetag: **08.04.83**

(54) **Organosilyl-Verbindungen und ihre Verwendung als Fungizide.**

(30) Priorität: **24.04.82 DE 3215409**

(43) Veröffentlichungstag der Anmeldung:
**09.11.83 Patentblatt 83/45**

(45) Bekanntmachung des Hinweises auf die Patenterteilung:
**24.07.85 Patentblatt 85/30**

(84) Benannte Vertragsstaaten:
**AT BE CH DE FR GB IT LI NL SE**

(56) Entgegenhaltungen:
**FR - A - 1 550 960**
**US - A - 3 558 683**

(73) Patentinhaber: **BASF Aktiengesellschaft, Carl-Bosch-Strasse 38, D-6700 Ludwigshafen (DE)**

(72) Erfinder: **Acker, Rolf-Dieter, Dr., Tuchbleiche 8, D-6906 Leimen (DE)**
Erfinder: **Buschmann, Ernst, Dr., Georg-Ludwig-Krebs-Strasse 10, D-6700 Ludwigshafen (DE)**
Erfinder: **Pommer, Ernst-Heinrich, Dr., Berliner Platz 7, D-6703 Limburgerhof (DE)**
Erfinder: **Ammermann, Eberhard, Dr., Sachsenstrasse 3, D-6700 Ludwigshafen (DE)**

**EP 0 093 274 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft neue Organosilylverbindungen, fungizide Mittel, die die neuen Wirkstoffe enthalten, Verfahren zur Herstellung solcher fungiziden Mischungen sowie Verfahren zur Bekämpfung von Schadpilzen mit diesen Fungiziden.

Es ist bekannt, N-Tridecyl-2,6-dimethylmorpholin oder seine Salze (z. B. das Azetat oder das Salz mit der Dodecylbenzolsulfonsäure) als Fungizide zu verwenden. (DE Nrn. 1164152, 1173722, 2641513).

Es wurde nun gefunden, dass Organosilylverbindungen der Formel I

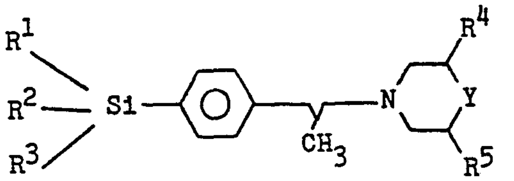

(I)

worin

$R^1$, $R^2$ und $R^3$ gleich oder verschieden sind und $C_1$-$C_{10}$-Alkyl, substituiertes $C_1$-$C_{10}$-Alkyl, $C_2$-$C_4$-Alkenyl, $C_2$-$C_4$-Alkinyl, $C_3$-$C_8$-Cycloalkyl, Phenyl oder substituiertes Phenyl, Chlorallyl, Methoxallyl,

$R^4$ und $R^5$ gleich oder verschieden sind und $C_1$-$C_5$-Alkyl oder Wasserstoff und

Y eine $CH_2$-Gruppe, Sauerstoff, Stickstoff oder alkylsubstituierten Stickstoff bedeuten und ihre Salze eine sehr gute fungizide Wirksamkeit besitzen.

$C_1$-$C_{10}$-Alkylreste sind z. B. $C_1$-$C_4$-Alkylreste, beispielsweise wie Methyl, Ethyl, Butyl oder Pentyl, Hexyl, Decyl. Substituierte $C_1$-$C_{10}$-Alkylreste sind $C_1$-$C_{10}$-Alkylreste, die z. B. substituiert sind durch Halogen (Chlor, Brom) oder durch Alkoxy (Methoxy, Ethoxy) oder durch Dialkylamino (z. B. Dimethylamino), beispielsweise Halogen-$C_1$-$C_4$-Alkylreste (Chlormethyl, Brom-i-propyl, Dichlorethyl, Tribrombutyl, Fluorethyl) oder Cyanononyl, Methylthiomethyl.

$C_2$-$C_4$-Alkenylreste sind beispielsweise Allyl, Vinyl, Methallyl.

$C_2$-$C_4$-Alkinylreste sind z. B. Propargyl, Ethinyl.

$C_3$-$C_8$-Cycloalkylreste sind z. B. Cyclopropyl, Cyclohexyl, Cyclopentyl, Cyclooctyl, Methylcyclohexyl, Dimethylcyclohexyl.

Substituierte Phenyle sind z. B. Halogenphenyle, beispielsweise Dichlorphenyl oder Methoxyphenyl, Toluol, Fluorphenyl, t-Butylphenyl, Methylthiophenyl, Dimethylaminophenyl.

$C_1$-$C_5$-Alkyle sind z. B. Methyl, Ethyl, i-Propyl, n-Pentyl.

Alkylsubstituierter Stickstoff ist z. B. $C_1$-$C_2$-alkylsubstituierter Stickstoff, beispielsweise N-Methyl, N-Ethyl.

Organosilylverbindungen gemäss Formel I, in der $R^1$, $R^2$, $R^3$ $C_1$-$C_4$-Alkyl oder Chlor-$C_1$-$C_4$-alkyl, $R^4$ und $R^5$ Methyl oder Wasserstoff und Y eine $CH_2$-Gruppe oder Sauerstoff bedeuten, werden bevorzugt.

Die neuen Verbindungen der Formel I lassen sich herstellen, indem man eine Verbindung der Formel II

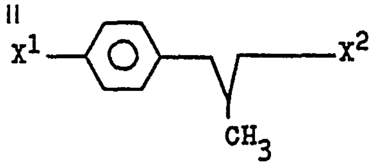

(II)

worin $X^1$ und $X^2$ gleich oder verschieden sind und Halogen bedeuten, mit einem Alkali- oder Erdalkalimetall oder einer Organometallverbindung, die ein Alkali- oder Erdalkalimetall enthält, umsetzt, wobei der Rest $X^1$ durch ein Alkali- oder Erdalkalimetall ersetzt wird, und die so erhaltene Metallverbindung mit einem Halogensilan der Formel III umsetzt,

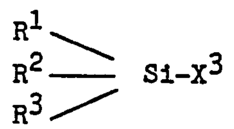

(III)

worin $R^1$, $R^2$ und $R^3$ die oben genannten Bedeutungen haben und $X^3$ Halogen bedeutet, und die so erhaltene Verbindung der Formel IV

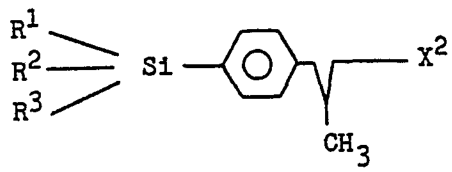

(IV)

worin $R^1$, $R^2$, $R^3$ und $X^2$ die oben genannten Bedeutungen haben, mit einem heterocyclischen Amin der Formel V

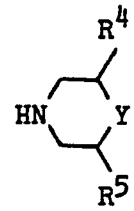

(V)

worin $R^4$, $R^5$ und Y die oben genannten Bedeutungen haben, ggf. zusammen mit einer Hilfsbase umsetzt.

Das Verfahren wird beispielsweise bei einer Temperatur von −80 bis +60° C bei der Umsetzung mit den Metallverbindungen durchgeführt. Als Metallverbindungen werden vorzugsweise die Metalle eingesetzt: Lithium, Natrium, Kalium, Magnesium und Calcium. Als Organometallverbindungen kommen organische Derivate der genannten Metalle in Frage, insbesondere Alkyllithiumverbindungen wie Methyllithium, n-, sec.-, t-Butyllithium und Phenyllithium oder Alkylmagnesiumhalogenide, z. B. Methylmagnesiumchlorid oder Ethylmagnesiumbromid, aber auch Metallalkylamine, z. B. Lithiumdiisopropylamid. Die Zugabe des Chlorsilans III erfolgt beispielsweise bei Temperaturen von −40 bis +30° C, zur Vervollständigung der Reaktion kann bei höherer Temperatur nachgerührt werden. Die Verbindung der Formel IV kann dann entweder direkt für die folgende Umsetzung verwendet werden oder in üblicher Weise gereinigt werden, z. B. durch Destillation oder Chromatographie.

Die Verbindung der Formel IV wird beispielsweise bei 50 bis 150° C mit der Verbindung der Formel V umgesetzt, die Reaktion benötigt 2 bis 12 h. Ggf. kann eine Hilfsbase zum Abfangen der entstehenden Säure zugesetzt werden. Die Verbindung I kann in üblicher Weise gereinigt werden, z. B. durch Kristallisation, Destillation oder Chromatographie. Man verwendet auf 1 Äquivalent Verbindung der Formel II beispielsweise 0,5 bis 1,5 Äquivalente des Metalls oder Metallorganyls, 0,8 bis 1,5 Äquivalente des Chlorsilans III und 1,0 bis 5,0 Äquivalente der Verbindung V sowie ggf. 0,8 bis 1,5 Äquivalente der Hilfsbase. Als Lösungsmittel werden unter den Reaktionsbedingungen inerte Stoffe verwendet.

Die Reinigung der Verbindung I erfolgt in üblicher Weise z. B. durch Extraktion, Kristallisation, Destillation oder Chromatographie.

Zweckmässig verwendet man für die Umsetzung unter den jeweiligen Reaktionsbedingungen inerte Lösungs- oder Verdünnungsmittel. Als Lösungsmittel für die Umsetzung mit den Metallverbindungen kommen beispielsweise Ether, z. B. Diethylether, Ethylpropylether, Methyl-tert.-butylether, n-Butylethylether, Di-n-butylether, Diisobutylether, Diisoamylether, Diisopropylether, Anisol, Phenetol, Cyclohexylmethylether, Diethylether, Ethylenglykoldimethylether, Tetrahydrofuran, Dioxan; aliphatische oder cycloaliphatische Kohlenwasserstoffe, z. B. Hexan, Pentan, Heptan, Pinan, Nonan, o-, m-, p-Cymol, Benzinfraktionen innerhalb eines Siedepunktintervalles von 70 bis 190° C, Cyclohexan, Methylcyclohexan, Dekalin, Petrolether, Ligroin, Toluol, o-, m-, p-Xylol, 2,2,4-Trimethylpentan, 2,2,3-Trimethylpentan, 2,3,3-Trimethylpentan, Octan in Betracht. Zweckmässig verwendet man das Lösungsmittel in einer Menge von 100 bis 2000 Gew.-%, vorzugsweise von 200 bis 700 Gew.-%, bezogen auf Ausgangsstoff II.

Als Säureakzeptoren (Hilfsbasen) für die Umsetzung und Verbindungen der Formel V können alle üblichen Säurebindemittel verwendet werden. Hierzu gehören vorzugsweise tertiäre Amine, Erdalkaliverbindungen, Ammoniumverbindungen und Alkaliverbindungen sowie entsprechende Gemische. Es können aber auch Zinkverbindungen verwendet werden. Es konnen z. B. als basische Verbindungen in Frage:

Kaliumhydroxid, Natriumhydroxid, Kaliumcarbonat, Natriumcarbonat, Lithiumhydroxid, Lithiumcarbonat, Natriumbicarbonat, Kaliumbicarbonat, Calciumhydroxid, Calciumoxid, Bariumoxid, Magnesiumhydroxid, Magnesiumoxid, Bariumhydroxid, Calciumcarbonat, Magnesiumcarbonat, Magnesiumbicarbonat, Magnesiumacetat, Zinkhydroxid, Zinkoxid, Zinkcarbonat, Zinkbicarbonat, Zinkacetat, Natriumformiat, Natriumacetat, Trimethylamin, Triethylamin, Tripropylamin, Triisopropylamin, Tributylamin, Triisobutylamin, Tri-sec.-butylamin, Tri-tert.-butylamin, Tribenzylamin, Tricyclohexylamin, Triamylamin, Trihexylamin, N,N-Dimethylanilin, N,N-Diethylanilin, N,N-Dipropylanilin, N,N-Dimethyltoluidin, N,N-Diethyltoluidin, N,N-Dipropyltoluidin, N,N-Dimethyl-p-aminopyridin, N,N-Diethyl-p-aminopyridin, N,N-Dipropyl-p-aminopyridin, N-Methylpyrrolidin, N-Ethylpyrrolidon, N,-Methylpiperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, α-Picolin, β-Picolin, γ-Picolin, Isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin, N,N-Dimethylcyclohexylamin, 2,6-Lutidin, 2,4-Lutidin, Trifurfurylamin, Triethylendiamin.

Zweckmässig verwendet man den Säureakzeptor in einem Über- oder Unterschuss von bis zu 20%, bezogen auf den Ausgangsstoff II oder IV.

Zweckmässig verwendet man für die Umsetzung mit Verbindungen der Formel V unter den jeweiligen Reaktionsbedingungen inerte Lösungs- oder Verdünnungsmittel. Als Lösungsmittel kommen beispielsweise Halogenkohlenwasserstoffe, insbesondere Chlorkohlenwasserstoffe, z. B. Tetrachlorethylen, 1,1,2,2,- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1-oder 1,1,2-Trichlorethan, Trichlorethylen, Pentachlorethan, o-, m-, p-Difluorbenzol, 1,2-Dichlorethan, 1,1-Dichlorethan, 1,2-cis-Dichlorethylen, Chlorbenzol, Fluorbenzol, Brombenzol, Jodbenzol, o-, m-, p-Dichlorbenzol, o-, p-, m-Dibrombenzol, o-, m-, p-Chlortoluol, 1,2,4-Trichlorbenzol; Ether, z. B. Ethylpropylether, Methyl-tert.-butylether, n-Butylethylether, Di-n-butylether, Diisobutylether, Diisoamylether, Diisopropylether, Anisol, Phenetol, Cyclohexylmethylether, Diethylether, Ethylenglykoldimethylether, Tetrahydrofuran, Dioxan, Thioanisol, β,β,β'-Dichlordiethylether; Nitrokohlenwasserstoffe wie Nitromethan, Nitroethan, Nitrobenzol, o-, m-, p-Chlornitrobenzol, o-Nitrotoluol; Nitrile wie Acetonitril, Butyronitril, Isobutyronitril, Benzonitril, m-Chlorbenzonitril; aliphatische oder cycloaliphatische Kohlenwasserstoffe, z. B. Heptan, Pinan, Nonan, o-, m-, p-Cymol, Benzinfraktionen innerhalb eines Siedepunktintervalles von 70 bis 190° C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan; Ester z. B. Ethylacetat, Acetessigester, Isobutylacetat; Amide, z. B. Formamid, Methylformamid, Dimethylformamid; Ketone, z. B. Aceton, Methylethylketon, ggf. auch Wasser und entsprechende Gemische in Betracht. Als Lösungsmittel können auch die Verbindungen der Formel V im Überschuss verwendet werden. Zweckmässig verwendet man das Lösungsmittel in einer Menge von 100 bis 2000 Gew.-%, vorzugsweise von 200 bis 700 Gew.-%, bezogen auf Ausgangsstoff II.

Zur Salzbildung mit Verbindungen der Formel I sind alle organischen und anorganischen Säuren geeignet, soweit sie pflanzenphysiologisch verträgliche Salze bilden. So sind z. B. Chloride, Bromide, Jodide, Sulfate, Phosphate, Acetate, Oxalate, Fumarate, Malonate, Alkyl- und Arylsulfonate zu nennen.

Die Salze werden erhalten, indem man die entsprechende Säure mit freiem Amin der Formel I, ggf. in einem inerten Lösungsmittel zusammengibt, das Lösungsmittel abdestilliert und den Rückstand ggf. umkristallisiert.

Die folgenden Beispiele erläutern die Herstellung der neuen Verbindungen.

Die angegebenen Teile sind Gewichtsteile.

*Beispiel 1:*

a) 24,7 Teile 2-Methyl-3-(4-bromphenyl)propylchloid gelöst in 20 Teilen Tetrahydrofuran (THF) wurden zu 2,4 Teilen Magnesium in 25 Teilen THF getropft. Man hielt die Reaktion bei 50 bis 52° C und liess anschliessend das Gemisch noch 30 min unter Rückfluss sieden. 16,5 Teile Triethylchlorsilan wurden bei Raumtemperatur zugetropft, dann wurde nochmals 6 h unter Rückfluss gekocht. Nach dem Abkühlen und Filtrieren wurde die Lösung eingeengt und destilliert. Man erhielt beim Sdp. 115 bis 120° C/0,01 Torr, $n_D^{24}$ = 1,5080, 20,3 Teile 2-Methyl-3-(4-triethylsilylphenyl)-propylchlorid.

b) 13,5 Teile 2-Methyl-3-(4-triethylsilylphenyl)-propylchlorid und 16,5 Teile cis-2,6-Dimethylmorpholin wurden zusammengegeben und 6 h bei 150° C gerührt. Nach dem Abkühlen wurde die Mischung mit gesättigter $Na_2CO_3$-Lösung etwa auf pH = 9 gestellt. Man extrahierte mit Methylenchlorid, trocknete die organische Phase und engte ein. Bei der Destillation bei 110 bis 114° C/0,01 Torr (0,01 mbar) erhielt man 12,6 Teile 4-[3-(4-triethylsilylphenyl)-2-methylpropyl]-cis-2,6-dimethylmorpholin, $n_D^{23}$ = 1,5025 (Verbindung Nr. 15).

*Vorschrift 1:*

10,0 Teile 2-Methyl-3-(4-bromphenyl)propylchlorid wurden in 80 Teilen THF vorgelegt. Bei −75 bis −70° C wurden dann 2,55 Teile n-Butyllithium (gelöst in Pentan) zugetropft, man rührte 30 min bei −50° C nach und tropfte bei dieser Temperatur 6,6 Teile n-Butyldimethylchlorsilan zu. Nach 30 min Nachrühren bei −50° C liess man das Reaktionsgemisch auf Raumtemperatur erwärmen und rührte 12 h nach.

Nach dem Filtrieren und Abdestillieren des Lösungsmittels wurde der Rückstand destilliert. Bei dem Sdp. 96 bis 100° C/0,08 mbar wurden 9,8 Teile 2-Methyl-3-(4-n-butyldimethylsilylphenyl)propylchlorid erhalten, $n_D^{22}$ = 1,5033.

*Vorschrift 2:*

15 Teile 2-Methyl-3-(4-bromphenyl)propylchlorid und 28 Teile cis-2,6-Dimethylmorpholin wurden 8 h bei 150° C gerührt. Nach dem Abkühlen wurde die Reaktionsmischung in 100 Teile Wasser gegeben, mit gesättigter wässeriger $Na_2CO_3$-Lösung auf pH = 9 bis 10 gestellt und mit Methylenchlorid extrahiert. Nach dem Trocknen und Einengen der organischen Phase wurde destilliert. Beim Sdp. 100 bis 102° C/0,01 mbar erhielt man 15,8 Teile 4-[3-(4-bromphenyl)-2-methylpropyl]-cis-2,6-dimethylmorpholin, $n_D^{22}$ = 1,5265.

*Beispiel 2:*

5,0 Teile 4-[3-(4-(n)-butyldimethylsilylphenyl)-2-methylpropyl]-cis-2,6-dimethylmorpholin und 7,6 Teile 20%ige wässerige Salzsäure wurden zusammengegeben. Nach 10 min Rühren wurde abgesaugt, mit Cyclohexan nachgewaschen und getrocknet. Es ergaben sich 4,9 Teile 4-[-3-(4-(n)-butyldimethylsilylphenyl)-2-methylpropyl]-cis-2,6-dimethylmorpholinhydrochlorid vom Schmp. 159 bis 162° C (Verbindung Nr. 25).

In entsprechender Weise wurden die folgenden Verbindungen hergestellt:

| Nr. | $R^1$ | $R^2$ | $R^3$ | $R^4$ | $R^5$ | Y | Salz | $n_D$/Fp./Sdp. |
|---|---|---|---|---|---|---|---|---|
| 1 | $CH_3$ | $CH_3$ | $CH_3$ | H | H | $CH_2$ | — | 115-120° C/0,07 mbar |
| 2 | $CH_3$ | $CH_3$ | $CH_3$ | H | H | $CH_2$ | HCl | 152-154 |
| 4 | $CH_3$ | $CH_3$ | $CH_3$ | $CH_3$ | $CH_3$ | O | — | 145-147° C/0,07 mbar |
| 15 | $C_2H_5$ | $C_2H_5$ | $C_2H_5$ | $CH_3$ | $CH_3$ | O | — | 1,5025 |
| 22 | n-$C_4H_9$ | $CH_3$ | $CH_3$ | $CH_3$ | $CH_3$ | O | — | 1,4950 |
| 25 | n-$C_4H_9$ | $CH_3$ | $CH_3$ | $CH_3$ | $CH_3$ | O | HCl | 159-162° C |
| 31 | $CH_2Cl$ | $CH_3$ | $CH_3$ | $CH_3$ | $CH_3$ | O | — | 1,5140 |
| 38 | $C_6H_5$ | $CH_3$ | $CH_3$ | H | H | $CH_2$ | — | 1,5475 |
| 39 | $C_6H_5$ | $CH_3$ | $CH_3$ | H | H | $CH_2$ | HCl | 197-200° C |
| 40 | $C_6H_5$ | $CH_3$ | $CH_3$ | $CH_3$ | $CH_3$ | O | — | 1,5370 |
| 41 | $C_6H_5$ | $CH_3$ | $CH_3$ | $CH_3$ | $CH_3$ | O | HCl | viskos |
| 43 | $C_6H_5$ | $CH_3$ | $CH_3$ | H | H | O | — | 1,5503 |

In entsprechender Weise können die folgenden Verbindungen hergestellt werden:

| Nr. | $R^1$ | $R^2$ | $R^3$ | $R^4$ | $R^5$ | Y | Salz | $n_D$/Fp./Sdp. |
|---|---|---|---|---|---|---|---|---|
| 3 | $CH_3$ | $CH_3$ | $CH_3$ | H | H | $CH_2$ | HBr | |
| 5 | $CH_3$ | $CH_3$ | $CH_3$ | $CH_3$ | $CH_3$ | O | HCl | |
| 6 | $CH_3$ | $CH_3$ | $CH_3$ | $CH_3$ | $CH_3$ | O | HI | |
| 7 | $CH_3$ | $CH_3$ | $C_2H_5$ | H | H | $CH_2$ | — | |

| Nr. | $R^1$ | $R^2$ | $R^3$ | $R^4$ | $R^5$ | Y | Salz | $n_D$/Fp./Sdp. |
|---|---|---|---|---|---|---|---|---|
| 8 | $CH_3$ | $CH_3$ | $C_2H_5$ | H | H | $CH_2$ | $(CO_2H)_2$ | |
| 9 | $CH_3$ | $CH_3$ | $C_2H_5$ | $CH_3$ | $CH_3$ | O | — | |
| 10 | $CH_3$ | $CH_3$ | $C_2H_5$ | $CH_3$ | $CH_3$ | O | $C_5H_{11}SO_3H$ | |
| 11 | $CH_3$ | $C_2H_5$ | $C_2H_5$ | H | H | $CH_2$ | — | |
| 12 | $CH_3$ | $C_2H_5$ | $C_2H_5$ | $CH_3$ | $CH_3$ | O | — | |
| 13 | $C_2H_5$ | $C_2H_5$ | $C_2H_5$ | H | H | $CH_2$ | — | |
| 14 | $C_2H_5$ | $C_2H_5$ | $C_2H_5$ | H | H | $CH_2$ | HBr | |
| 16 | $C_2H_5$ | $C_2H_5$ | $C_2H_5$ | $CH_3$ | $CH_3$ | O | $C_{12}H_{23}SO_3H$ | |
| 17 | $C_2H_5$ | $C_2H_5$ | $C_2H_5$ | H | H | O | — | |
| 18 | n-$C_3H_7$ | $CH_3$ | $CH_3$ | H | H | $CH_2$ | — | |
| 19 | n-$C_3H_7$ | $CH_3$ | $CH_3$ | $CH_3$ | $CH_3$ | O | — | |
| 20 | n-$C_4H_9$ | $CH_3$ | $CH_3$ | H | H | $CH_2$ | — | |
| 21 | n-$C_4H_9$ | $CH_3$ | $CH_3$ | H | H | $CH_2$ | HCl | |
| 23 | n-$C_4H_9$ | $CH_3$ | $CH_3$ | $CH_3$ | $CH_3$ | O | HBr | |
| 24 | n-$C_4H_9$ | $CH_3$ | $CH_3$ | H | H | O | — | |
| 26 | i-$C_4H_9$ | $CH_3$ | $CH_3$ | H | H | $CH_2$ | — | |
| 27 | i-$C_4H_9$ | $CH_3$ | $CH_3$ | $CH_3$ | $CH_3$ | O | — | |
| 28 | t-$C_4H_9$ | $CH_3$ | $CH_3$ | H | H | $CH_2$ | — | |
| 29 | t-$C_4H_9$ | $CH_3$ | $CH_3$ | $CH_3$ | $CH_3$ | O | — | |
| 30 | t-$C_4H_9$ | $CH_3$ | $CH_3$ | $CH_3$ | $CH_3$ | O | HCl | |
| 32 | $CH_2Cl$ | $CH_3$ | $CH_3$ | $CH_3$ | $CH_3$ | O | HBr | |
| 33 | $CH_2Cl$ | $CH_3$ | $CH_3$ | $CH_3$ | $CH_3$ | O | HCl | |
| 34 | $CH_2Cl$ | $CH_3$ | $CH_3$ | H | H | $CH_2$ | — | |
| 35 | $C_6H_{11}$ | $CH_3$ | $CH_3$ | H | H | $CH_2$ | — | |
| 36 | $C_6H_{11}$ | $CH_3$ | $CH_3$ | $CH_3$ | $CH_3$ | O | — | |
| 37 | $C_5H_9$ | $CH_3$ | $CH_3$ | $CH_3$ | $CH_3$ | O | — | |
| 42 | $C_6H_5$ | $CH_3$ | $CH_3$ | $CH_3$ | $CH_3$ | O | HBr | |
| 44 | $C_6H_5$ | $CH_3$ | $CH_3$ | H | H | O | HCl | |
| 45 | 4-$ClC_6H_5$ | $CH_3$ | $CH_3$ | H | H | $CH_2$ | — | |
| 46 | 4-$ClC_6H_5$ | $CH_3$ | $CH_3$ | $CH_3$ | $CH_3$ | O | — | |
| 47 | $C_6H_5-CH_2$ | $CH_3$ | $CH_3$ | H | H | $CH_2$ | — | |
| 48 | $C_6H_5CH_2$ | $CH_3$ | $CH_3$ | H | H | $CH_2$ | HCl | |
| 49 | $C_6H_5CH_2$ | $CH_3$ | $CH_3$ | $CH_3$ | $CH_3$ | O | — | |
| 50 | $C_6H_5CH_2$ | $CH_3$ | $CH_3$ | $CH_3$ | $CH_3$ | O | $(CO_2H)_2$ | |
| 51 | $CH_2=CH$ | $CH_3$ | $CH_3$ | $CH_3$ | $CH_3$ | O | — | |
| 52 | $CH_3CH=CH_2$ | $CH_3$ | $CH_3$ | H | H | $CH_2$ | HBr | |
| 53 | $C_6H_5$ | $C_6H_5$ | $CH_3$ | $CH_3$ | $CH_3$ | O | — | |

Die neuen Verbindungen und ihre Salze zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden. Ferner können sie auch im Materialschutz verwendet werden.

Besonders interessant sind die fungiziden Verbindungen für die Bekämpfung einer Vielzahl von Pilzen an verschiedenen Kulturpflanzen oder ihren Samen, insbesondere Weizen, Roggen, Gerste, Hafer, Reis, Mais, Baumwolle, Soja, Kaffee, Bananen, Erdnüsse, Zuckerrohr, Obst und Zierpflanzen im Gartenbau sowie Gemüse – wie Gurken, Bohnen und Kürbisgewächse.

Die neuen Verbindungen sind insbesondere geeignet zur Bekämpfung folgender Pflanzenkrankheiten:

*Erysiphe graminis* (echter Mehltau) in Getreide,
*Erysiphe cichoracearum* (echter Mehltau) an Kürbisgewächsen,
*Podosphaera leucotricha* an Äpfeln,
*Uncinula necator* an Reben,
*Erysiphe polygoni* an Bohnen,
*Sphaerotheca pannosa* an Rosen,
*Puccinia*-Arten an Getreide,
*Rhizoctonia solani* an Baumwolle sowie
*Helminthosporium*-Arten an Getreide,
*Ustilago*-Arten an Getreide und Zuckerrohr,
*Rhynchosporium secale* an Getreide,
*Venturia inaequalis* (Apfelschorf).

Die Verbindungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwekken; sie sollten in jedem Fall eine feine und gleichmässige Verteilung der wirksamen Substanz gewährleisten. Die Formulierungen werden in bekannter Weise hergestellt, z. B. durch Verstrecken des Wirkstoffs mit Lösungsmitteln und/oder Trägerstoffen, ggf. unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage:

Lösungsmittel wie Aromaten (z. B. Xylol, Benzol), chlorierte Aromaten (z. B. Chlorbenzole), Paraffine (z. B. Erdölfraktionen), Alkohole (z. B. Methanol, Butanol), Amine (z. B. Ethanolamin, Dimethylformamid) und Wasser; Trägerstoffe wie natürliche Gesteinsmehle (z. B. Kaoline, Tonerden, Talkum, Kreide) und synthetische Gesteinsmehle (z. B. hochdisperse Kieselsäure, Silikate); Emulgiermittel wie nichtionogene und anionische Emulgatoren (z. B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.-% Wirkstoff.

Die Aufwandmengen liegen je nach Art des gewünschten Effektes zwischen 0,1 und 3 kg Wirkstoff oder mehr je ha.

Die neuen Wirkstoffe können auch als fungizid wirksame Bestandteile zum Schutz von Materialien, z. B. in Form öliger Holzschutzmittel zum Schutz von Holz gegen holzzerstörende Pilze, eingesetzt werden. Folgende holzzerstörende Pilze lassen sich beispielsweise mit den erfindungsgemässen Wirkstoffen bekämpfen:

*Merulius lacrimans, Coniophora puteana, Lentinus lepideus, Lenzites trabea, Trametes versicolor, Stereum hirsutum, Fomos annosus.*

Die neuen Wirkstoffe können in Zubereitungen, wie Lösungen, Emulsionen, Pasten und Öldispersionen oder Wundverschlussmittel, angewendet werden. Diese Zubereitungen enthalten beispielsweise 0,25 bis 50% Wirkstoff. Die Aufwandmengen betragen je nach Art des gewünschten Effektes 0,5 bis 8 g Wirkstoff je $m^2$ zu schützende Holzoberfläche bzw. 50 bis 4000 g Wirkstoff/$m^3$ Holz. Anstrichfarben enthalten beispielweise 0,5 bis 2 Gew.-% Wirkstoff. Zum Schutz von Holzwerkstoffen können die Wirkstoffe als Emulsion oder im Untermischverfahren dem Klebstoff beispielsweise in Mengen von 2 bis 6 Gew.-% zugesetzt werden.

Die Anwendung der Wirkstoffe auf Holz erfolgt beispielsweise durch Streichen, Spritzen, Sprühen, Tauchen oder Druckimprägnierungs- oder Diffusionsverfahren.

Die Mittel bzw. die daraus hergestellten gebrauchsfertigen Zubereitungen wie Lösungen, Emulsionen, Suspensionen, Pulver, Stäube, Pasten oder Granulate werden in bekannter Weise angewendet, im Pflanzenschutz beispielsweise durch Versprühen, Vernebeln, Verstäuben, Verstreuen, Beizen oder Giessen.

Beispiele für Zubereitungen sind:

I. Man vermischt 90 Gew.-Teile der Verbindung 1 mit 10 Gew.-Teilen N-Methyl-α-pyrrolidon und erhält eine Lösung, die zur Anwendung in Form kleinster Tropfen geeignet ist.

II. 10 Gew.-Teile der Verbindung 2 werden in einer Mischung gelöst, die aus 90 Gew.-Teilen Xylol, 6 Gew.-Teilen des Anlagerungsproduktes von 8 bis 10 mol Ölsäure-N-monoethanolamid, 2 Gew.-Teilen Calciumsalz der Dodecylbenzolsulfonsäure und 2 Gew.-Teilen des Anlagerungsproduktes von 40 mol Ethylenoxid an 1 mol Ricinusöl besteht. Durch Eingiessen in Wasser erhält man eine wässerige Dispersion.

III. 20 Gew.-Teile der Verbindung 4 werden in einer Mischung gelöst, die aus 60 Gew.-Teilen Cyclohexanon, 30 Gew.-Teilen Isobutanol, 10 Gew.-Teilen des Anlagerungsproduktes von 40 mol Ethylenoxid an 1 mol Ricinusöl besteht. Durch Eingiessen und feines Verteilen der Lösung in Wasser erhält man eine wässerige Dispersion.

IV. 20 Gew.-Teile der Verbindung 15 werden in einer Mischung gelöst, die aus 25 Gew.-Teilen Cyclohexanon, 65 Gew.-Teilen einer Mineralölfraktion vom Siedepunkt 210 bis 280° C und 10 Gew.-Teilen des Anlagerungsproduktes von 40 mol Ethylenoxid an 1 mol Ricinusöl besteht. Durch Eingiessen und feines Verteilen der Lösung in Wasser erhält man eine wässerige Dispersion.

V. 80 Gew.-Teile der Verbindung 22 werden mit 3 Gew.-Teilen des Natriumsalzes der Diisobutylnaphthalin-α-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Verbindung 2 werden mit 97 Gew.-Teilen feinteiligem Kaolin innig vermischt. Man erhält auf diese Weise ein Stäubemittel, das 3 Gew.-% des Wirkstoffs enthält.

VII. 30 Gew.-Teile der Verbindung 1 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gew.-Teile der Verbindung 4 werden mit 10 Teilen Natriumsalz eines Phenolsulfonsäure-Harnstoff-Formaldehyd-Kondensates, 2 Teilen Kieselgel und 48 Teilen Wasser innig vermischt. Man erhält eine stabile wässerige Dispersion. Durch Verdünnen mit Wasser erhält man eine wässerige Dispersion.

IX. 20 Teile der Verbindung 2 werden mit 2 Teilen Calciumsalz der Dodecylbenzolsulfonsäure, 8 Teilen Fettalkoholpolyglykolether, 2 Teilen Natriumsalz eines Phenolsulfonsäure-Harnstoff-Formaldehyd-Kondensates und 68 Teilen eines paraffinischen Mineralöls innig vermischt. Man erhält eine stabile ölige Dispersion.

X. Zur Herstellung eines öligen Holzschutzmittels mit 1% (Gew.-%) Wirkstoff wird zunächst 1 Teil (Gew.-Teil) der Verbindung 22 unter leichtem Erwärmen in 55 Teilen einer aromatenreichen Benzinfraktion gelöst. Anschliessend werden 10 Teile eines Alkydharzes zugefügt und bei

Raumtemperatur mit Testbenzin auf 100 Teile ergänzt.

In entsprechender Weise werden ölige Holzschutzmittel mit 0,25 bis 5 Gew.-% Wirkstoff 22 hergestellt.

Zur Herstellung wasserabweisender Imprägnieranstriche können den öligen Holzschutzmitteln sog. „water repellents" zugesetzt werden. Geeignete Substanzen sind beispielsweise Zinkstearat, Aluminiumstearat, Wachse. Ferner können zur Erzielung von Farbeffekten feinteilige anorganische oder organische Pigmente oder öllösliche Farbstoffe in die Formulierungen eingearbeitet werden.

Zum Schutz des Holzes gegen Pilzbefall werden üblicherweise 50 bis 200 ml der in Beispiel 1 angeführten öligen Holzschutzmittel je $m^2$ Holzoberfläche durch Streichen, Spritzen oder Tauchen aufgebracht.

Die neuen Mittel können in diesen Anwendungsformen auch zusammen mit anderen Wirkstoffen vorliegen, wie z. B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrösserung des fungiziden Wirkungsspektrums.

Die folgende Liste von Fungiziden, mit denen die neuen Verbindungen kombiniert werden können, soll die Kombinationsmöglichkeiten erläutern.

Fungizide, die mit den erfindungsgemässen Verbindungen kombiniert werden können, sind beispielsweise:

Schwefel,

Dithiocarbamate und deren Derivate, wie

Ferridimethyldithiocarbamat,

Zinkdimethyldithiocarbamat,

Mangan-Zink-ethylendiamin-bis-dithiocarbamat, und

Zinkethylenbisdithiocarbamat,

Tetramethylthiuramdisulfide,

Ammoniak-Komplex von Zink-(N,N-ethylen-bis-dithiocarbamat), und

N,N'-Polyethylen-bis-(thiocarbamoyl)disulfid,

Zink-(N,N'-propylen-bis-dithiocarbamat),

Ammoniak-Komplex von Zink-(N,N'-propylen-bis-dithiocarbamat), und

N,N'-Polypropylen-bis-(thiocarmanoyl)disulfid;

Nitroderivate, wie

Dinitro-(1-methylheptyl)phenylcrotonat,

2-sec.-Butyl-4,6-dinitrophenyl-3,3-dimethylacrylat,

2-sec.-Butyl-4,6-dinitrophenylisopropylcarbonat;

heterocyclische Substanzen, wie

N-(1,1,2,2-Tetrachlorethylthio)tetrahydrophthalimid,

N-Trichlormethylthiotetrahydrophthalimid,

2-Heptadecyl-2-imidazolinacetat,

2,4-Dichlor-6-(o-chloranilino)-s-triazin,

0,0-Diethylphthalimidophonothioat,

5-Amino-1-[bis-(dimethylamino)phosphinyl]-3-phenyl-1,2,4-triazol,

2,3-Dicyano-1,4-Dithioanthrachinon,

2-Thio-1,3-dithio-(4,5-b)-chinoxalin,

1-(Butylcarbamoyl)-2-benzimidazol-carbaminsäuremethylester,

4-(2-Chlorphenylhydrazono)-3-methyl-5-isoxazolon,

Pyridin-2-thio-1-oxid,

8-Hydroxychinolin bzw. dessen Kupfersalz,

2,3-Dihydro-5-carboxanilido-6-methyl-1,4-oxathiin-4,4-dioxid,

2,3-Dihydro-5-carboxanilido-6-methyl-1,4-oxathiin,

2-[Furyl-(2)]-benzimidazol,

Piperazin-1,4-diylbis-[1-(2,2,2-trichlorethyl)]formamid,

2-[Thiazolyl-(4)]-benzimidazol,

5-Butyl-2-dimethylamino-4-hydroxy-6-methylpyrimidin,

Bis-(p-chlorphenyl)-3-pyridinmethanol,

1,2-Bis-(3-ethoxycarbonyl-2-thioureido)-benzol,

1,2-Bis-(3-methoxycarbonyl-2-thioureido)-benzol,

sowie verschiedene Fungizide, wie

Dodecylguanidinacetat,

3-[3-(3,5-Dimethyl-2-oxycyclohexyl)-2-hydroxyethyl]glutarimid,

Hexachlorbenzol,

N-Dichlorfluormethylthio-N',N'-dimethyl-N-phenylschwefelsäurediamid,

2,5-Dimethylfuran-3-carbonsäureanilid,

2-Methylbenzoesäureanilid,

2-Jodbenzoesäureanilid,

1-(3,4-Dichloranilino)-1-formylamino-2,2,2-trichlorethan,

2,6-Dimethyl-N-tridecylmorpholin bzw. dessen Salze,

2,6-Dimethyl-N-cyclododecylmorpholin bzw. dessen Salze,

DL-Methyl-N-(2,6-dimethylphenyl)-N-furoyl-(2)-alaninat,

DL-N-(2,6-Dimethylphenyl)-N-(2'-methoxyacetyl)alaninmethylester,

5-Nitroisophthalsäure-di-isopropylester,

1-(1',2',4'-Triazolyl-1')-[1-(4'-chlorphenoxy)]-3,3-dimethylbutan-2-on,

1-(1',2',4'-Triazolyl-1')-[1-(4'-chlorphenoxy)]-3,3-dimethylbutan-2-ol,

N-(2,6-Dimethylphenyl)-N-chloracetyl-D,L-2-aminobutyrolacton,

N-(n-Propyl)-N-(2,4,6-trichlorphenoxyethyl)-N'-imidazolylharnstoff,

N-Cyclohexyl-N-methoxy-2,5-dimethylfuran-3-carbonsäureamid,

2,4,5-Trimethylfuran-3-carbonsäureanilid,

5-Methyl-5-vinyl-3-(3,5-dichlorphenyl)-2,4-dioxo-1,3-oxazolidin,

5-Methoxymethyl-5-methyl-3-(3,5-dichlorphenyl)-2,4-dioxo-1,3-oxazolidin,

N-[3-(p-tert.-Butylphenyl)-2-methylpropyl]-cis-2,6-dimethylmorpholin,

N-Formyl-N-morpholin-2,2,2-trichlorethylacetal,

1-[2-(2,4-Dichlorphenyl)-4-ethyl-1,3-dioxolan-2-yl-methyl]-1H-1,2,4-triazol,

1-[2-(2,4-Dichlorphenyl)-4-n-propyl-1,3-dioxolan-2-yl-methyl]-1H-1,2,4-triazol.

Bei Verwendung im Holzschutz sind Mischungen mit folgenden Verbindungen als besonders günstig anzusehen:

Organozinnverbindungen, wie Tributylzinnoxid und Tributylzinnbenzoat,
Methylenbisthiocyanat,
Alkyldimethylbenzylammoniumchlorid,
Cetylpyridiniumchlorid,
Chlorierte Phenole, wie Mercaptobenzthiazol, Tetra- und Penthachlorphenol,
Tetrachlorisophthalsäuredinitril,
2-Halogenbenzoesäureanilid,
N-Cyclohexyl-N-methoxy-2,5-dimethylfuran-3-carbonsäureamid,
2,2,4,5-Trimethylfuran-3-carbonsäureanilid,
Benzimidazol-2-carbaminsäuremethylester,
2-Thiocyanomethylthiobenzothiazol,
Kupfernaphthenat,
Kupfer-8-oxychinolin,
Alkali- und Metallsalze des N-Hydroxy-N-cyclohexyldiazeniumoxids,
p-Chlorphenyl-3-propargylformal,
3-Jod-2-propynylbutylcarbamat,
N-Dichlorfluormethylthio-N',N'-dimethyl-N-phenylschwefelsäurediamid.

Die folgenden Versuche erläutern die fungizide Wirkung. Dabei wurden die folgenden bekannten Wirkstoffe zum Vergleich verwendet.

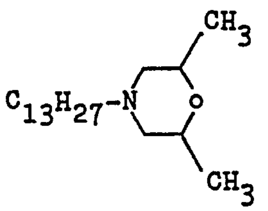
(A)

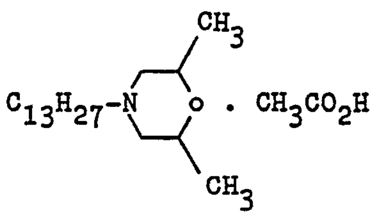
(B)

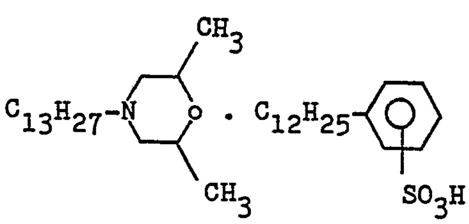
(C)

*Versuch 1:*

*Fungizide Wirksamkeit gegenüber holzzerstörenden Pilzen*

Zur Ermittlung der fungiziden Wirksamkeit gegenüber den holzzerstörenden Pilzen *Coniophora puteana* und *Trametes versicolor* wurden Kiefernsplintholzklötzchen mit den Abmessungen 50 × 25 × 15 mm mit jeweils 100 g/cm² Holzoberfläche öliger Holzschutzmittelzubereitungen, die 1% Wirkstoff enthielten, bestrichen. Nach vierwöchiger Lagerung wurden die behandelten Klötzchen zusammen mit den unbehandelten Klötzchen in Glasschalen gelegt, die als Prüfpilz *Coniophora puteana* bzw. *Trametes versicolor* auf einem Nähragar enthielten. Die Schalen wurden anschliessend in einem Klimaraum bei einer Temperatur von 22° C und einer relativen Luftfeuchte von 70% bebrütet. Nach dreimonatiger Versuchsdauer wurden die Klötzchen von anhaftendem Pilzmyzel befreit und getrocknet. Anschliessend wurde das Ausmass der Holzzerstörung festgestellt.

Das Ergebnis des Versuches zeigte, dass die Verbindung 22 bei Anwendung als 1%ige Zubereitung eine gute fungizide Wirkung (100%) hatte.

*Versuch 2:*

*Wirksamkeit gegen Weizenmehltau*

Blätter von in Töpfen gewachsenen Weizenkeimlingen der Sorte „Jubilar" wurden mit wässeriger Spritzbrühe, die 80% Wirkstoff und 20% Emulgiermittel in der Trockensubstanz enthält, besprüht und 24 h nach dem Antrocknen des Spritzbelages mit Oidien (Sporen) des Weizenmehltaus *(Erysiphe graminis var tritici)* bestäubt. Die Versuchspflanzen wurden anschliessend im Gewächshaus bei Temperaturen zwischen 20 und 22° C und 75 bis 80% relativer Luftfeuchtigkeit aufgestellt. Nach 7 d wurde das Ausmass der Mehltauentwicklung ermittelt.

Das Ergebnis des Versuches zeigte, dass die Verbindungen 2, 4, 15, 22 bei Anwendung als 0,025 oder 0,006%ige Spritzbrühe eine bessere fungizide Wirkung zeigten als die bekannten Wirkstoffe A, B und C.

*Versuch 3:*

*Wirksamkeit gegen Weizenbraunrost*

Blätter von in Töpfen gewachsenen Weizensämlingen der Sorte „Jubilar" wurden mit Sporen des Braunrostes *(Puccinia recondita)* bestäubt. Danach wurden die Töpfe für 24 h bei 20 bis 22° C in eine Kammer mit hoher Luftfeuchtigkeit (90 bis 95%) gestellt. Während dieser Zeit keimten die Sporen aus und die Keimschläuche drangen in das Blattgewebe ein. Die infizierten Pflanzen wurden anschliessend mit wässerigen Spritzbrühen, die 80% Wirkstoff und 20% Emulgiermittel in der Trockensubstanz enthalten, tropfnass gespritzt. Nach dem Antrocknen des Spritzbelages wurden die Versuchspflanzen im Gewächshaus bei Temperaturen zwischen 20 und 22° C und 65 bis 70% relativer Luftfeuchte aufgestellt. Nach 8 d wurde das Ausmass der Rostpilzentwicklung auf den Blättern ermittelt.

Das Ergebnis des Versuches zeigte, dass die Wirkstoffe 2, 4, 15, 22 bei Anwendung als 0,025%ige Spritzbrühe eine bessere fungizide Wirkung zeigten als die bekannten Wirkstoffe A, B und C.

**Patentansprüche** für die Vertragsstaaten BE, CH, DE, FR, GB, IT, LI, NL, SE

1. Organosilylverbindungen der allgemeinen Formel (I)

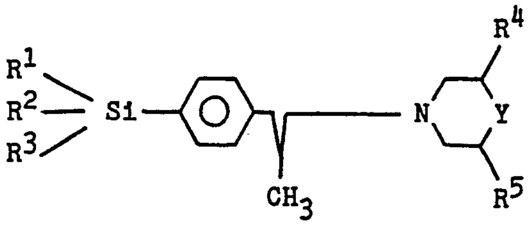 (I)

worin

$R^1$, $R^2$ und $R^3$ gleich oder verschieden sind und $C_1$-$C_{10}$-Alkyl, substituiertes $C_1$-$C_{10}$-Alkyl, $C_2$-$C_4$-Alkenyl, $C_2$-$C_4$-Alkinyl, $C_3$-$C_8$-Cycloalkyl, Phenyl oder substituiertes Phenyl, Chlorallyl, Methoxallyl,

$R^4$ und $R^5$ gleich oder verschieden sind und $C_1$ bis $C_5$ Alkyl oder Wasserstoff, und

Y eine $CH_2$-Gruppe, Sauerstoff, Stickstoff oder alkylsubstituierten Stickstoff bedeuten und ihre Salze.

2. Verfahren zur Herstellung von Organosilylverbindungen der allgemeinen Formel (I)

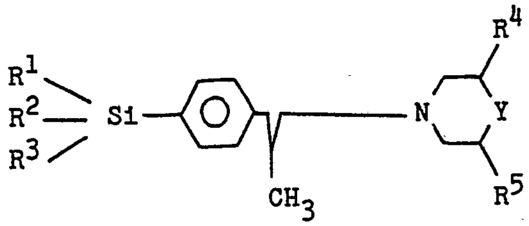 (I)

nach Anspruch 1, dadurch gekennzeichnet, dass man eine Verbindung der Formel (II)

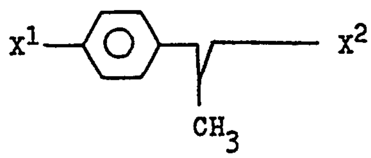 (II)

worin

$X^1$ und $X^2$ gleich oder verschieden sind und Halogen bedeuten, mit einem Alkali- oder Erdalkalimetall oder einer Organometallverbindung, die ein Alkali- oder Erdalkalimetall enthält, umsetzt, wobei der Rest $X^1$ durch ein Alkali- oder Erdalkalimetall ersetzt wird, und die so erhaltene Metallverbindung mit einem Halogensilan der Formel (III) umsetzt,

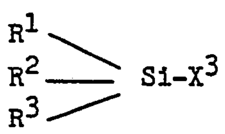 (III)

worin

$R^1$, $R^2$ und $R^3$ die oben genannten Bedeutungen haben und $X^3$ Halogen bedeutet, und die so erhaltene Verbindung der Formel (IV)

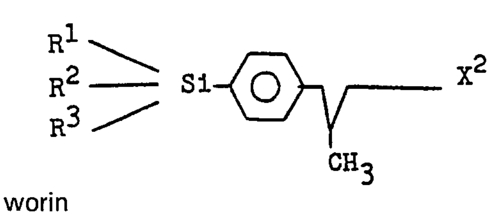 (IV)

worin

$R^1$, $R^2$, $R^3$ und $X^2$ die oben genannten Bedeutungen haben, mit einem heterocyclischen Amin der Formel (V)

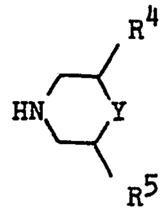 (V)

worin

$R^4$, $R^5$ und Y die oben genannten Bedeutungen haben, ggf. zusammen mit einer Hilfsbase umsetzt.

3. Fungizides Mittel, enthaltend eine Organosilylverbindung der allgemeinen Formel (I)

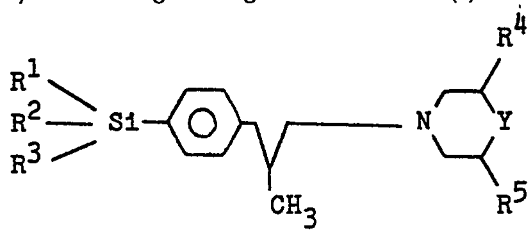 (I)

nach Anspruch 1.

4. Fungizides Mittel, enthaltend eine Organosilylverbindung der allgemeinen Formel (I)

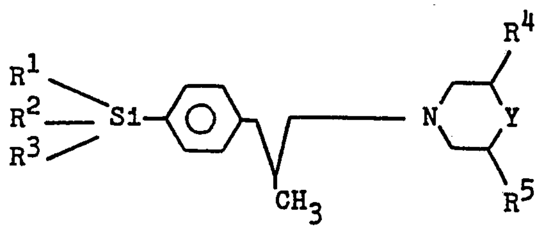 (I)

nach Anspruch 1 und einen festen oder flüssigen Trägerstoff.

5. Verfahren zur Bekämpfung von Pilzen, dadurch gekennzeichnet, dass man eine Organosilylverbindung der allgemeinen Formel (I)

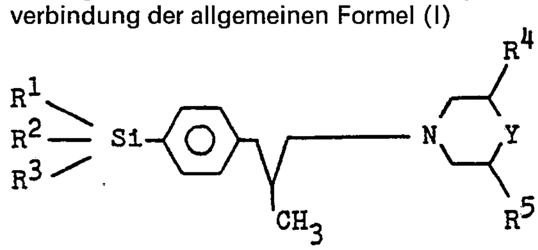 (I)

nach Anspruch 1 auf die Pilze oder auf durch Pilzbefall bedrohte Flächen, Pflanzen, Materialien oder Saatgüter einwirken lässt.

6. Verfahren zur Herstellung von Fungiziden, dadurch gekennzeichnet, dass man eine Organosilylverbindung der allgemeinen Formel (I)

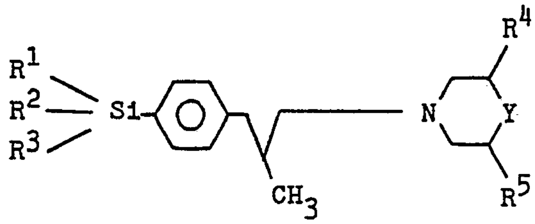 (I)

nach Anspruch 1 mit einem festen oder flüssigen Trägerstoff mischt.

7. Organosilylverbindung gemäss Anspruch 1, dadurch gekennzeichnet, dass $R^1$, $R^2$, $R^3$ $C_1$-$C_4$-

Alkyl, $R^4$ und $R^5$ Methyl oder Wasserstoff und Y eine $CH_2$-Gruppe oder Sauerstoff bedeuten.

8. Fungizid gemäss Anspruch 3, dadurch gekennzeichnet, dass $R^1$, $R^2$, $R^3$ $C_1$-$C_4$-Alkyl, $R^4$ und $R^5$ Methyl oder Wasserstoff und Y eine $CH_2$-Gruppe oder Sauerstoff bedeuten.

9. 4-[3-(4-(n)-butyldimethylsilylphenyl)-2-methylpropyl]-cis-2,6-dimethylmorpholin.

**Patentansprüche** für den Vertragsstaat: AT

1. Verfahren zur Herstellung von Organosilylverbindungen der allgemeinen Formel (I)

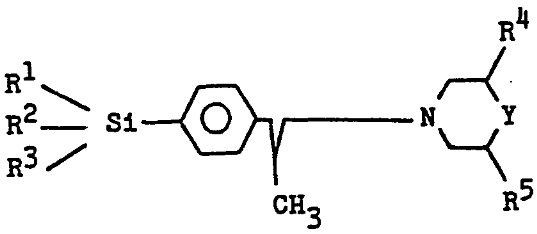
(I)

worin

$R^1$, $R^2$ und $R^3$ gleich oder verschieden sind und $C_1$-$C_{10}$-Alkyl, substituiertes $C_1$-$C_{10}$-Alkyl, $C_2$-$C_4$-Alkenyl, $C_2$-$C_4$-Alkinyl, $C_3$-$C_8$-Cycloalkyl, Phenyl oder substituiertes Phenyl, Chlorallyl, Methoxallyl,

$R^4$ und $R^5$ gleich oder verschieden sind und $C_1$ bis $C_5$ Alkyl oder Wasserstoff, und

Y eine $CH_2$-Gruppe, Sauerstoff, Stickstoff oder alkylsubstituierten Stickstoff bedeuten, oder ihren Salzen, dadurch gekennzeichnet, dass man eine Verbindung der Formel (II)

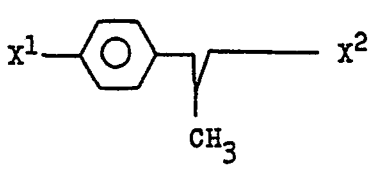
(II)

worin

$X^1$ und $X^2$ gleich oder verschieden sind und Halogen bedeuten, mit einem Alkali- oder Erdalkalimetall oder einer Organometallverbindung, die ein Alkali- oder Erdalkalimetall enthält, umsetzt, wobei der Rest $X^1$ durch ein Alkali- oder Erdalkalimetall ersetzt wird, und die so erhaltene Metallverbindung mit einem Halogensilan der Formel (III) umsetzt,

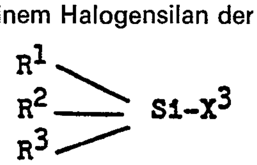
(III)

worin

$R^1$, $R^2$ und $R^3$ die oben genannten Bedeutungen haben und $X^3$ Halogen bedeutet, und die so erhaltene Verbindung der Formel (IV)

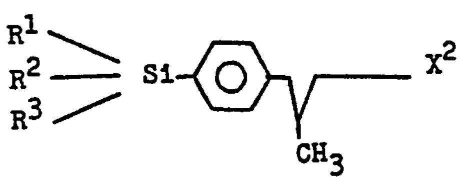
(IV)

worin

$R^1$, $R^2$, $R^3$ und $X^2$ die oben genannten Bedeutungen haben, mit einem heterocyclischen Amin der Formel (V)

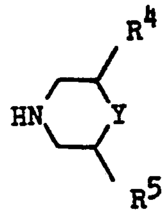
(V)

worin

$R^4$, $R^5$ und Y die oben genannten Bedeutungen haben, ggf. zusammen mit einer Hilfsbase umsetzt.

2. Fungizides Mittel, enthaltend eine Organosilylverbindung der allgemeinen Formel (I)

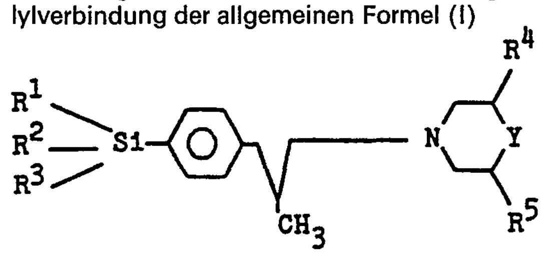
(I)

nach Anspruch 1.

3. Fungizides Mittel, enthaltend eine Organosilylverbindung der allgemeinen Formel (I)

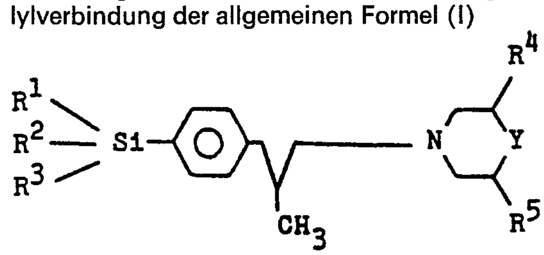
(I)

nach Anspruch 1 und einen festen oder flüssigen Trägerstoff.

4. Verfahren zur Bekämpfung von Pilzen, dadurch gekennzeichnet, dass man eine Organosilylverbindung der allgemeinen Formel (I)

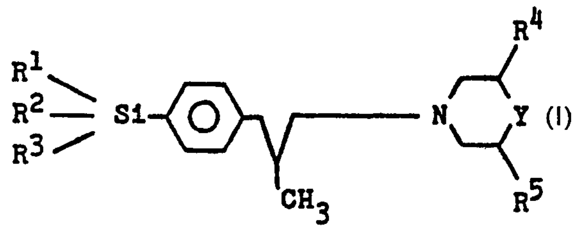
(I)

nach Anspruch 1 auf die Pilze oder auf durch Pilzbefall bedrohte Flächen, Pflanzen, Materialien oder Saatgüter einwirken lässt.

5. Verfahren zur Herstellung von Fungiziden, dadurch gekennzeichnet, dass man eine Organosilylverbindung der allgemeinen Formel (I)

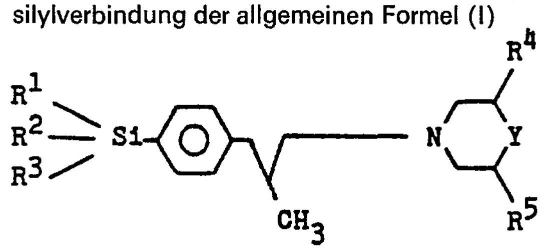
(I)

nach Anspruch 1 oder ihr Salz mit einem festen oder flüssigen Trägerstoff mischt.

6. Fungizid gemäss Anspruch 2, dadurch gekennzeichnet, dass $R^1$, $R^2$, $R^3$ $C_1$-$C_4$-Alkyl, $R^4$ und $R^5$ Methyl oder Wasserstoff und Y eine $CH_2$-Gruppe oder Sauerstoff bedeuten.

7. Fungizid gemäss Anspruch 2, enthaltend 4-[3-(4-(n)-butyldimethylsilylphenyl)-2-methylpropyl]-cis-2,6-dimethylmorpholin.

**Claims** for the Contracting States: BE, CH, DE, FR, GB, IT, LI, NL, SE

1. An organosilyl compound of the general Formula (I)

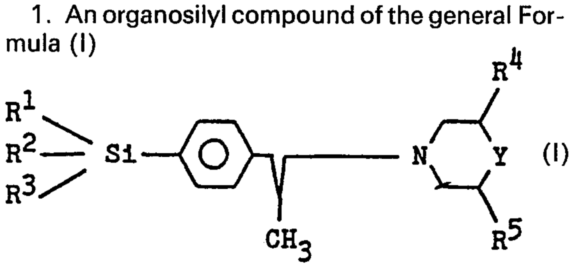 (I)

where

$R^1$, $R^2$ and $R^3$ are identical or different and each is $C_1$-$C_{10}$-alkyl, substituted $C_1$-$C_{10}$-alkyl, $C_2$-$C_4$-alkenyl, $C_2$-$C_4$-alkynyl, $C_3$-$C_8$-cycloalkyl, phenyl or substituted phenyl, chloroallyl or methoxyallyl, $R^4$ and $R^5$ are identical or different and each is $C_1$-$C_5$-alkyl or hydrogen, and Y is $CH_2$, oxygen, nitrogen or alkyl-substituted nitrogen, or a salt thereof.

2. A process for the preparation of an organosilyl compound of the general Formula (I)

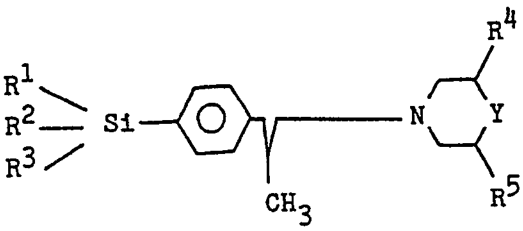 (I)

as claimed in Claim 1, wherein a compound of the Formula (II)

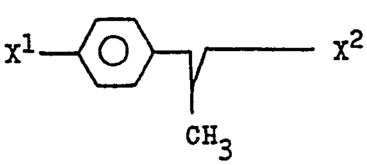 (II)

where

$X^1$ and $X^2$ are identical or different and each is halogen, is reacted with an alkali metal or alkaline earth metal or an organometallic compound containing an alkali metal or alkaline earth metal, $X^1$ being replaced by an alkali metal or alkaline earth metal, and the resulting metal compound is reacted with a halosilane of the Formula (III)

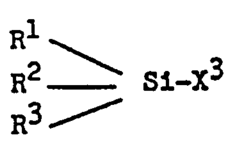 (III)

where

$R^1$, $R^2$ and $R^3$ have the above meanings, and $X^3$ is halogen, and the resulting compound of the Formula (IV)

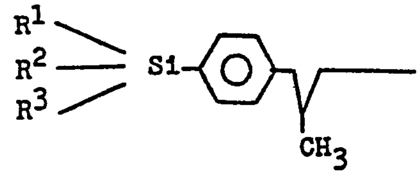 (IV)

where

$R^1$, $R^2$, $R^3$ and $X^2$ have the above meanings, is reacted with a heterocyclic amine of the Formula (V)

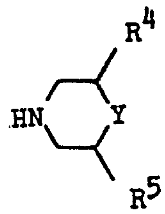 (V)

where

$R^4$, $R^5$ and Y have the above meanings, if necessary together with an auxiliary base.

3. A fungicidal agent containing an organosilyl compound of the general Formula (I)

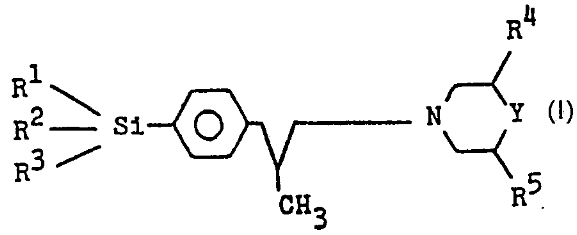 (I)

as claimed in Claim 1.

4. A fungicidal agent containing an organosilyl compound of the general Formula (I)

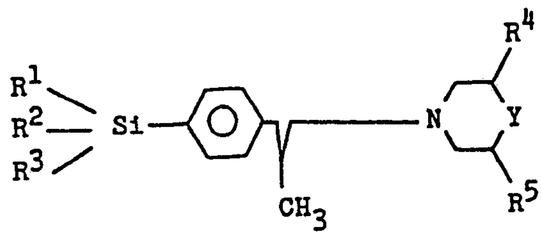 (I)

as claimed in Claim 1, and a solid or liquid carrier.

5. A process for combating fungi, wherein an organosilyl compound of the general Formula (I)

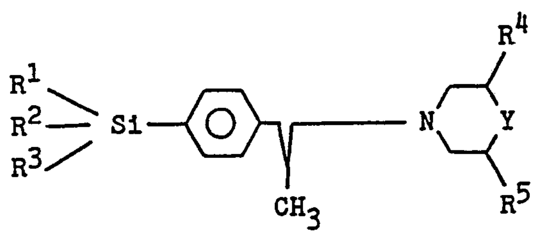 (I)

as claimed in Claim 1 is allowed to act on the fungi or on areas, plants, materials or seed threatened by fungus attack.

6. A process for the production of fungicides, wherein an organosilyl compound of the general Formula (I)

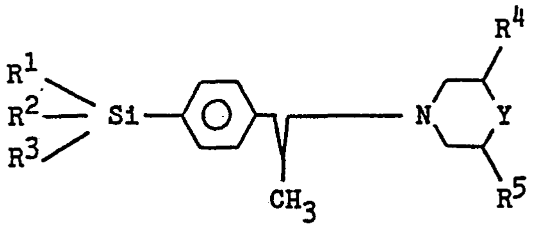 (I)

as claimed in Claim 1 is mixed with a solid or liquid carrier.

7. A organosilyl compound as claimed in Claim 1, where $R^1$, $R^2$ and $R^3$ are $C_1$-$C_4$-alkyl, $R^4$ and $R^5$ are methyl or hydrogen, and Y is $CH_2$ or oxygen.

8. A fungicide as claimed in Claim 3, where $R^1$, $R^2$ and $R^3$ are $C_1$-$C_4$-alkyl, $R^4$ and $R^5$ are methyl or hydrogen, and Y is $CH_2$ or oxygen.

9. 4-[3-(4-(n)-butyldimethylsilylphenyl)-2-methylpropyl]-cis-2,6-dimethylmorpholine.

**Claims** for the Contracting State: AT

1. A process for the preparation of an organosilyl compound of the general Formula (I)

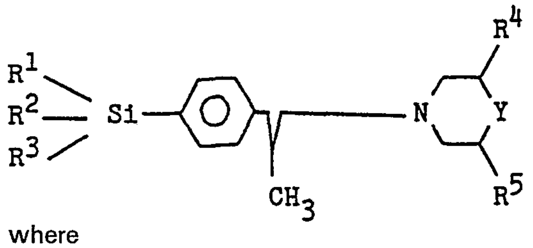 (I)

where

$R^1$, $R^2$ and $R^3$ are identical or different and each is $C_1$-$C_{10}$-alkyl, substituted $C_1$-$C_{10}$-alkyl, $C_2$-$C_4$-alkenyl, $C_2$-$C_4$-alkynyl, $C_3$-$C_8$-cycloalkyl, phenyl or substituted phenyl, chloroallyl or methoxyallyl, $R^4$ and $R^5$ are identical or different and each is $C_1$-$C_5$-alkyl or hydrogen, and Y is $CH_2$, oxygen, nitrogen or alkyl-substituted nitrogen, or a salt thereof, wherein a compound of the Formula (II)

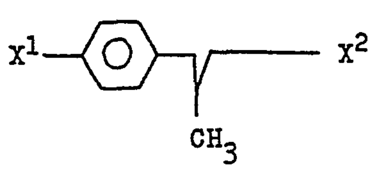 (II)

where

$X^1$ and $X^2$ are identical or different and each is halogen, is reacted with an alkali metal or alkaline earth metal or an organometallic compound containing an alkali metal or alkaline earth metal, $X^1$ being replaced by an alkali metal or alkaline earth metal, and the resulting metal compound is reacted with a halosilane of the Formula (III)

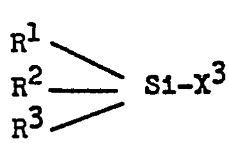 (III)

where $R^1$, $R^2$ and $R^3$ have the above meanings, and $X^3$ is halogen, and the resulting compound of the Formula (IV)

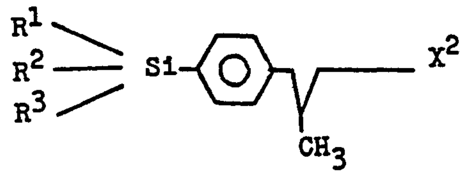 (IV)

where

$R^1$, $R^2$, $R^3$ and $X^2$ have the above meanings, is reacted with a heterocyclic amine of the Formula (V)

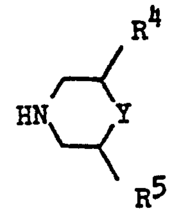 (V)

where

$R^4$, $R^5$ and Y have the above meanings, if necessary together with an auxiliary base.

2. A fungicidal agent containing an organosilyl compound of the general Formula (I)

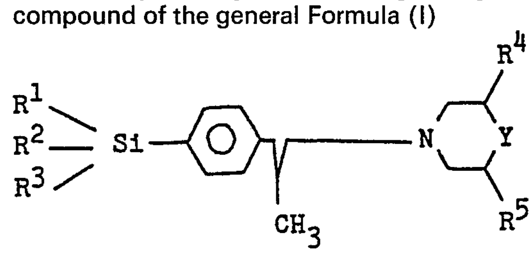 (I)

as defined in Claim 1.

3. A fungicidal agent containing an organosilyl compound of the general Formula (I)

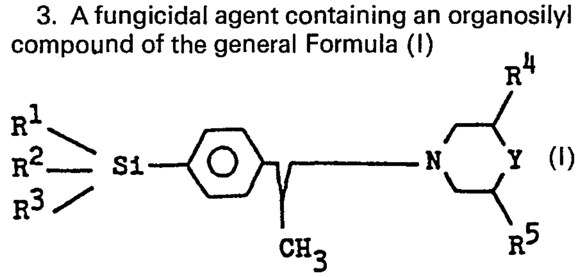 (I)

as defined in Claim 1, and a solid or liquid carrier.

4. A process for combating fungi, wherein an organosilyl compound of the general Formula (I)

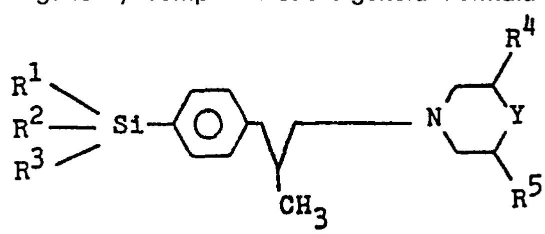 (I)

as defined in Claim 1 is allowed to act on the fungi or on areas, plants, materials or seed threatened by fungus attack.

5. A process for the production of fungicides, wherein an organosilyl compound of the general Formula (I)

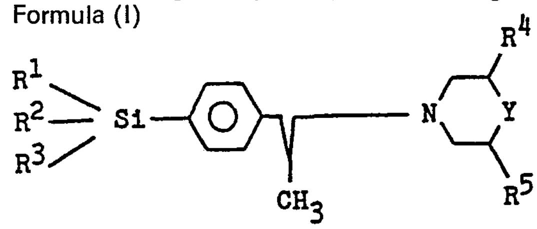 (I)

as defined in Claim 1 is mixed with a solid or liquid carrier.

6. A fungicide as claimed in Claim 2, where $R^1$, $R^2$ and $R^3$ are $C_1$-$C_4$-alkyl, $R^4$ and $R^5$ are methyl or hydrogen, and Y is $CH_2$ or oxygen.

7. A fungicide, as claimed in Claim 2, containing 4-[3-(4-(n)-butyldimethylsilylphenyl)-2-methylpropyl]-cis-2,6-dimethylmorpholine.

**Revendications** pour les Etats contractants BE, CH, DE, FR, GB, IT, LI, NL, SE

1. Composés organosilyliques de formule générale (I) et leurs sels

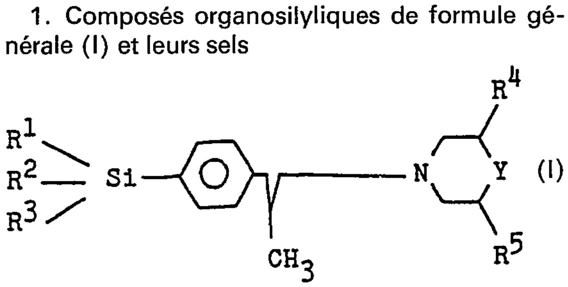
(I)

dans laquelle:

$R^1$, $R^2$ et $R^3$ sont identiques ou différents et représentent alkyle en $C_1$-$C_{10}$, alkyle en $C_1$-$C_{10}$ substitué, alcényle en $C_2$-$C_4$, alkinyle en $C_2$-$C_4$, cycloalkyle en $C_3$-$C_8$, phényle ou phényle substitué, chlorallyle, méthoxyllyle,

$R^4$ et $R^5$ sont identiques ou différents et représentent alkyle en $C_1$ à $C_6$ ou hydrogène, et

Y représente un groupe $CH_2$, oxygène, azote ou azote substitué par alkyle.

2. Procédé de préparation de composés organosilyliques de formule générale (I)

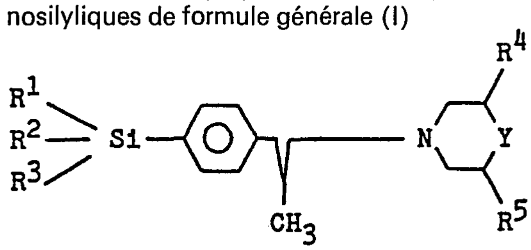
(I)

selon la revendication 1, caractérisé par le fait que l'on fait réagir un composé de formule (II)

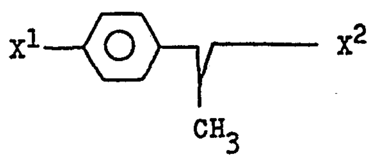
(II)

où $X^1$ et $X^2$ sont identiques ou différents et représentent halogène, avec un métal alcalin ou alcalino-terreux ou un composé organo-métallique qui contient un métal alcalin ou alcalino-terreux, le reste $X^1$ étant remplacé par un métal alcalin ou alcalino-terreux, et le composé métallique ainsi obtenu étant mis à réagir avec un halogéno-silane de formule (III)

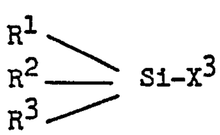
(III)

où $R^1$, $R^2$ et $R^3$ ont les significations données ci-dessus et $X^3$ représente un halogène, et on fait réagir le composé de formule (IV) ainsi obtenu

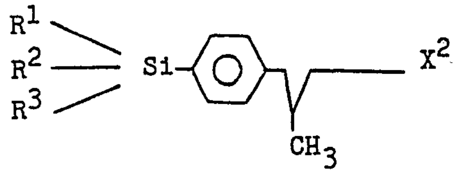
(IV)

où $R^1$, $R^2$, $R^3$ et $X^2$ ont les significations données plus haut, avec une amine hétérocyclique de formule (V)

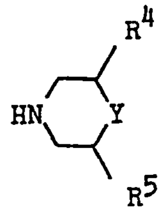
(V)

où $R^4$, $R^5$ et Y ont les significations données plus haut, éventuellement avec en même temps une base auxiliaire.

3. Agent fongicide, contenant un composé organosilylique de formule générale (I)

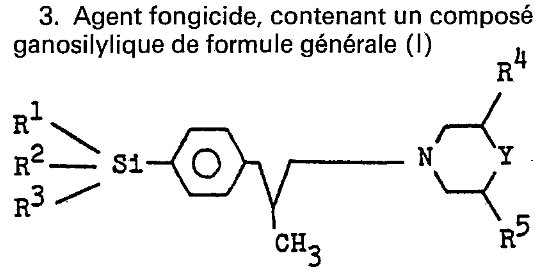
(I)

selon la revendication 1.

4. Agent fongicide, contenant un composé organosilylique de formule générale (I)

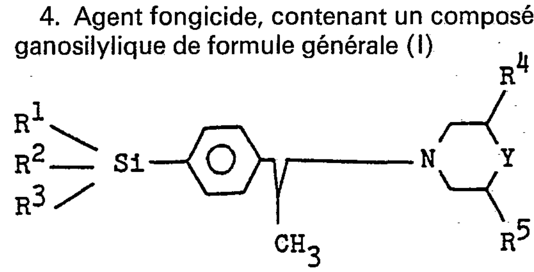
(I)

selon la revendication 1, et un support solide ou liquide.

5. Procédé de lutte contre les champignons, caractérisé par le fait que l'on fait agir sur les champignons ou sur les surfaces, plantes, matériaux ou semences menacés par une attaque par champignons, un composé organosilylique de formule générale (I)

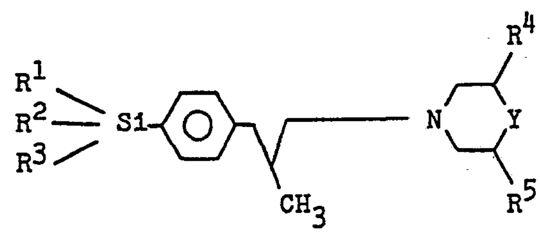
(I)

selon la revendication 1.

6. Procédé de préparation de fongicides, caractérisé par le fait que l'on mélange avec un support solide ou liquide un composé organosilylique de formule générale (I)

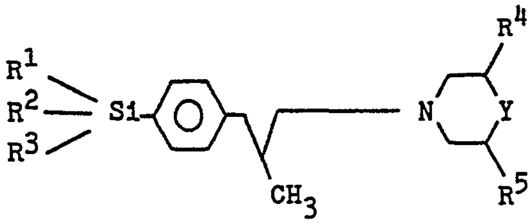

(I)

selon la revendication 1.

7. Composé organosilylique selon la revendication 1, caractérisé par le fait que $R^1$, $R^2$, $R^3$ représentent alkyle en $C_1$-$C_4$, $R^4$ et $R^5$ méthyle ou hydrogène et Y un groupe $CH_2$ ou oxygène.

8. Fongicide selon la revendication 3, caractérisé par le fait que $R^1$, $R^2$, $R^3$, représentent alkyle en $C_1$-$C_4$, $R^4$ et $R^5$ méthyle ou hydrogène et Y un groupe $CH_2$ ou oxygène.

9. 4-[3-(4-(n)-butyldiméthylsilylphényl)-2-méthylpropyl]-cis-2,6-diméthylmorpholine.

**Revendications** pour l'Etat contractant: AT

1. Procédé de préparation de composés organosilylique de formule générale (I)

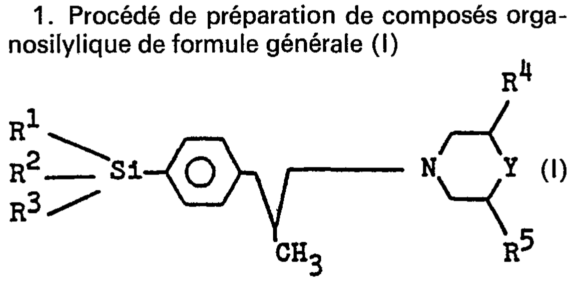

(I)

dans laquelle:

$R^1$, $R^2$ et $R^3$ sont identiques ou différents et représentent alkyle en $C_1$-$C_{10}$, alkyle en $C_1$-$C_{10}$ substitué, alcényle en $C_2$-$C_4$, alkinyle en $C_2$-$C_4$, cyclolakyle en $C_3$-$C_8$, phényle ou phényle substitué, chlorallyle, méthoxallyle,

$R^4$ et $R^5$ sont identiques ou différents et représentent alkyle en $C_1$ à $C_5$ ou hydrogène, et

Y représente un groupe $CH_2$, oxygène, azote ou azote substitué par alkyle, caractérisé par le fait que l'on fait réagir un composé de formule (II)

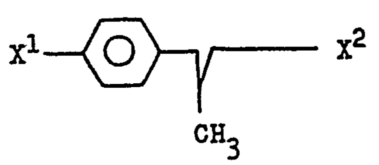

(II)

où $X^1$ et $X^2$ sont identiques ou différents et représentent halogène, avec un métal alcalin ou alcalino-terreux ou un composé organo-métallique qui contient un métal alcalin ou alcalino-terreux, le reste $X^1$ étant remplacé par un métal alcalin ou alcalino-terreux, et le composé métallique ainsi obtenu étant mis à réagir avec un halogénosilane de formule (III)

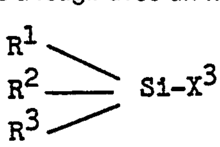

(III)

où $R^1$, $R^2$ et $R^3$ ont les significations données ci-dessus et $X^3$ représente un halogène, et on fait réagir le composé de formule (IV) ainsi obtenu

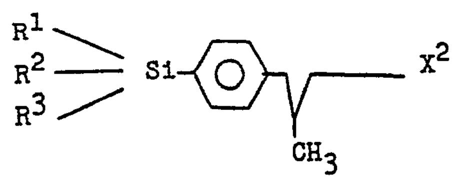

(IV)

où $R^1$, $R^2$, $R^3$ et $X^2$ ont les significations données plus haut, avec une amine hétérocyclique de formule (V)

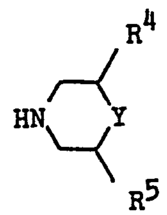

(V)

où $R^4$, $R^5$ et Y ont les significations données plus haut, éventuellement avec en même temps une base auxiliaire.

2. Agent fongicide, contenant un composé organosilylique de formule générale (I)

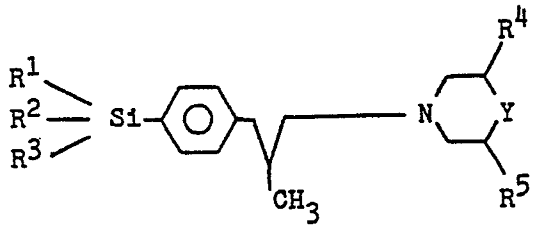

(I)

selon la revendication 1.

3. Agent fongicide, contenant un composé organosilylique de formule générale (I)

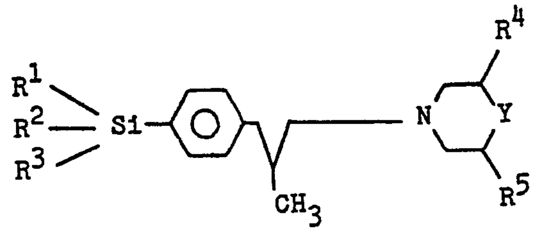

(I)

selon la revendication 1, et un support solide ou liquide.

4. Procédé de lutte contre les champignons, caractérisé par le fait que l'on fait agir sur les champignons ou sur les surfaces, plantes, matériaux ou semences menacés par une attaque par champignons, un composé organosilylique de formule générale (I)

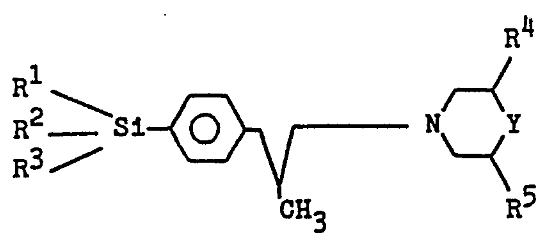

(I)

selon la revendication 1.

5. Procédé de préparation de fongicides, caractérisé par le fait que l'on mélange avec un support solide ou liquide un composé organosilylique de formule générale (I)

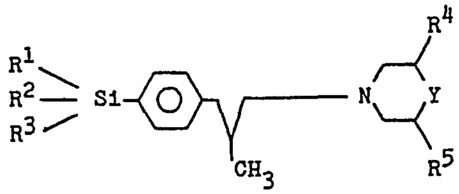

(I)

selon la revendication 1.

6. Fongicide selon la revendication 2, caractérisé par le fait que $R^1$, $R^2$, $R^3$, représentent alkyle en $C_1$-$C_4$, $R^4$ et $R^5$ méthyle ou hydrogène et Y un groupe $CH_2$ ou oxygène.

7. Fongicide selon la revendication 2, contenant 4-[3-(4-(n)-butyldiméthylsilylphényl)-2-méthylpropyl]-cis-2,6-diméthylmorpholine.